Europäisches Patentamt

European Patent Office

Office européen des brevets

(19)

(11) Veröffentlichungsnummer : **0 054 574**
**B1**

# (12) EUROPÄISCHE PATENTSCHRIFT

(45) Veröffentlichungstag der Patentschrift :
04.07.84

(21) Anmeldenummer : **80108019.3**

(22) Anmeldetag : **18.12.80**

(51) Int. Cl.³ : **F 16 L 23/02**

(54) **Flansch.**

(43) Veröffentlichungstag der Anmeldung :
**30.06.82 Patentblatt 82/26**

(45) Bekanntmachung des Hinweises auf die Patenterteilung : **04.07.84 Patentblatt 84/27**

(84) Benannte Vertragsstaaten :
**BE CH DE FR LI**

(56) Entgegenhaltungen :
**DE-A- 2 236 562**
**DE-A- 2 838 497**
**DE-A- 2 853 722**

(73) Patentinhaber : **Schulz & Co. KG**
**Kuhleshütte 85**
**D-4150 Krefeld 13 (DE)**

(72) Erfinder : **Schulz, Wilhelm**
**Kuhleshütte 85**
**D-4150 Krefeld (DE)**

(74) Vertreter : **Patentanwaltsbüro Cohausz & Florack**
**Postfach 14 01 47**
**D-4000 Düsseldorf 1 (DE)**

**Beschreibung**

Die Erfindung betrifft einen Flansch als Verbindungselement für Rohrleitungen, Armaturen oder Behälter, bestehend aus einem im Querschnitt U-förmigen Flanschring und einem im Querschnitt ebenfalls U-förmigen Ringformteil, deisen Stegteil die Dichtfläche (4) des Flansches bildet, wobei der Flanschring Löcher in seinem Stegteil für den Durchtritt von Befestigungsschrauben, einen in Richtung auf die Dichtfläche zu abgewinkelten Außenrand und einem in gleicher Richtung um 90° abgewinkelten Innenrand aufweist und das Ringformteil einen um 90° von der Dichtfläche weg gebogenen Außenrand und einen an oder auf das Rohr oder einen Stutzen an der Armatur oder dem Behälter geschweißten rohrförmigen Innenrand besitzt und wobei der Außenrand des Flanschrings den Außenrand des Ringformteils umgreift, der Innenrand des Flanschrings an dem Stegteil des Ringformteils anliegt und der Außenrand des Ringformteils im gespannten Zustand der Flanschverbindung auf dem Stegteil des Flanschrings ruht.

Das Ziel der Ausbildung jeder Flanschverbindung ist stets, aus preislichen Gründen mit möglichst geringem Materialaufwand für die Flansche eine sichere Abdichtung an der Verbindungsstelle zu erreichen. Dabei sollte nur dort höherwertiges Material zum Einsatz kommen, wo korrosive Medien mit Teilen der Flanschverbindung in Berührung kommen, während alle übrigen Flanschverbindungteile aus geringwertigerem Material hergestellt werden sollten.

Voraussetzung für eine gute Abdichtung an der Verbindungsstelle ist eine solche Ausbildung der Flanschverbindung, daß die zwischen die zu verbindenden Teile eingelegte Dichtung oder Packung auf der gesamten Fläche gleichmäßig zusammengepreßt wird.

Mit den herkömmlichen Flanschen ist dies nur sehr unvollkommen zu erreichen. Da die das Zusammenpressen der Dichtung bewirkende Kraft durch das Anziehen der Befestigungschrauben in einem Abstand zur Dichtfläche eingeleitet wird, entsteht ein Biegemoment auf den Flansch, das eine Schrägstellung der Dichtflächen zueinander hervorruft. Die an der Verbindungsstelle auf die Dichtflächen gelegte Dichtung oder Packung wird dementsprechend im Querschnitt keilförmig verformt, und zwar außen stärker als innen.

Ein Flansch der einleitend geschilderten gattung ist z. B. aus der DE-A-2 838 497 (Fig. 5) bekannt. Dieser bekannte aus zwei im Querschnitt U-förmigen, mit aufeinanderzu gerichteten Schenkeln zusammengesetzten Ringen bestehende Flansch hat zwar höhere Stabilität als ein Flansch aus Vollmaterial, löst aber nicht das erwähnte Problem der direkten Einleitung der Preßkraft in die Dichtung beim Anziehen der Befestigungsschrauben, so daß es auch bei ihm zu einer im Querschnitt keilförmigen Ausbildung der Dichtung kommen kann.

Aufgabe der Erfindung ist die Schaffung eines Flansches, der eine gleichmäßige Zusammenpressung der an der Verbindungsstelle zwischen die Flansche eingelegten Dichtung sicherstellt.

Zur Lösung dieser Aufgabe wird bei einem Flansch der eingangs genannten Gattung vorgeschlagen, daß der Innenrand des Flanschrings eine Höhe h besitzt, die um die Länge s größer ist als die Höhe o des möglichst nahe an dem Teilkreis der Schraubenlöcher in dem Flanschring gelegenen Außenrandes des Ringformteils, wobei die Länge s so bemessen ist, daß beim Anziehen der Befestigungsschrauben erst nach elastischer Verformung des Flanschrings sein Stegteil an dem Außenrand des Ringformteils zur Anlage Kommt.

Aus der DE-A-2 236 562 war es an sich bekannt bei einem Überwurfflansch den Außenrand eines Anschlagrings für einen U-förmigen Flanschring an einem radial weiter nach innen als die Schraubenlöcher des Flanschrings, aber sehr nahe an diesen als Auflage und Unterstützung für den Flanschring auszubilden.

Die Länge s des erfindungsgemäßen Flansches soll je nach Nennweite vorzugsweise im Bereich von Zehntelmillimeter bis Millimeter liegen. Je größer die Nennweite des Flansches ist, desto größer kann die Spaltlänge s sein.

Der Innenrand des Flanschrings sollte möglichst nahe an dem Innenrand des Ringformteils liegen. Auf diese Weise kommt die beim Anziehen ausgeübte Kraft zunächst auf den Innenrand der Dichtung zur Auswirkung.

Die den erfindungsgemäßen Flansch bildenden Teile haben eine einfache Form und können daher vorzugsweise als Preßteile mit verhältnismäßig geringem Kostenaufwand gefertigt werden. Aufgrund der stabilen Konstruktion des Flansches kann der Querschnitt geringer sein als der von Schmiedeflanschen, was neben der damit verbundenen Materialkosteneinsparung noch den Vorteil hat, daß weniger Verformungsenergie aufgewandt werden muß und leichtere preiswertere Fertigungsanlagen verwendet werden können.

Neben diesem zum Teil auch bekannten Flanschausführungen anhaftenden Vorteilen weist der erfindungsgemäße Flansch vor allem den Vorteil auf, eine gleichmäßige Pressung der Dichtung auf der gesamten Dichtfläche zu bewirken bzw. am Innenrand der Dichtung zusätzlich eine Vorspannung erzeugen zu können, der einem Leckwerden aufgrund eines Innendrucks entgegenwirkt. Dieser Vorteil ist mit bekannten Flanschen nicht zu erreichen. Diese Wirkung des erfindungsgemäßen Flanschs rührt daher, daß beim Anziehen der Befestigungsschrauben die Krafteinleitung zunächst allein über den Innenrand des Flanschrings auf das am Ende des Rohres verschweißte Ringformteil erfolgt. Erst nach Überbrückung des Abstandes s zwischen

dem Stegteil des Flanschrings und dem Außenrand des Ringformteils erfolgt die weitere Krafteinleitung in die Flanschverbindung zusätzlich auch über den Außenrand des Ringformteils. Die Kraft wird dann vom Außen- und Innenrand aus in die Dichtfläche eingeleitet, was zu einer gleichmäßigen Weiterpressung der Dichtung führt.

Der Außenrand des Ringformteils sollte möglichst nahe an den Schraubenlöchern liegen, damit die Krafteinleitung beim Anziehen der Befestigungsschrauben über kurze Hebelarme in die Dichtfläche erfolgt.

Der Flanschring kann mit dem Innenrand des Ringformteils verschweißt sein, wenn eine Festflanschverbindung geschaffen werden soll. Ist dagegen eine Losflanschverbindung geplant, sollten am Innenrand des Ringformteils oder auf dem Rohr selbst Anschläge vorgesehenen sein, die eine axiale Bewegung des Flanschrings auf dem Ringformteil oder Rohr verhindern, ein Drehen des Flanschrings gegenüber dem Ringformteil oder Rohr jedoch zulassen.

Bei hohen Anforderungen an die Rost- bzw. Korrosionsbeständigkeit braucht nur das Ringformteil aus hochwertigem Material zu bestehen während der Flanschring, der mit dem die Rohrleitung durchströmenden Medium nicht in Kontakt kommt, aus geringwertigerem Stahl, wie Kohlenstoffstahl, bestehen kann. Dabei kann prinzipiell sowohl das Ringformteil wie auch der Flanschring in gepreßter oder gegossener Ausführung zum Einsatz kommen. Das Ringformteil kann auch aus einem Bördel mit angeschweißtem Außenrand hergestellt sein.

Das Wesen der Erfindung liegt in der gemeinsamen Anwendung folgender teils an sich bekannter zur Erreichung des gesteckten Ziels aber unverzichtbarer und daher in kombinatorischem Zusammenhang stehender Maßnahmen :

a) beide den Flansch bildende Teile, Ringformteil und Flanschring, sind im Querschnitt U-förmig und mit einander zugekehrten Schenkel zusammengesetzt,

b) der Außenrand des Ringformteils liegt möglichst nahe an den Schraubenlöchern im Flanschring,

c) der Innenrand des Flanschrings hat eine um die Spaltlänge s größere Höhe h als die Höhe o des Außenrandes des Ringformteils.

Zur Bedeutung der einzelnen Merkmale ist zu sagen, daß die an sich bekannte U-Querschnittsform der Flanschteile (Merkmal a)), einmal die gewünschte Steifigkeit als Voraussetzung für Materialeinsparung bewirkt, hauptsächlich aber die gegenseitige Abstützung zur Einleitung der Kräfte von zwei Seiten in die Dichtfläche ermöglicht. Das Merkmal b) stellt sicher, daß die Einleitung der Anpreßkraft auf möglichst kurzem Weg in die Dichtfläche erfolgt, so daß kein großes Biegemoment auf den Flanschring ausgeübt wird, das zu seiner Verformung führen könnte. Dem neuen Merkmal c) kommt im Zusammenwirken der beiden anderen Merkmale a) und b) im Rahmen der Erfindung zentrale Bedeutung zu, wird durch dieses doch sichergestellt, daß eine gleichmäßige Verformung der Dichtung erfolgt und zusätzlicher Schutz gegen Leckage im Dichtungsbereich durch elastische Vorspannung im Flansch geboten wird.

In der Zeichnung sind Ausführungsbeispiele des erfindungsgemäßen Flanschs dargestellt. Es zeigen :

Figur 1 eine Flanschverbindung unter Einsatz des erfindungsgemäßen Flanschs in einer Ausführungsform im Längsschnitt und

Figur 2 in Teilansicht,

Figur 3 ein zweites Ausführungsbeispiel des Flanschs im Längsschnitt im nichtgespannten und

Figur 4 im festgespannten Zustand,

Figur 5 ein weiteres Ausführungsbeispiel im Längsschnitt und

Figur 6 in Teilansicht,

Figur 7 eine Losflansch-Ausführung des Flanschs im Längsschnitt,

Figur 8 die Ausführung als Blindflansch im Längsschnitt und

Figur 9 den Längsschnitt eines Flanschs für beheizte oder gekühlte Rohrleitungen, Behälter oder Armaturen.

An das Ende eines Rohrs 3 oder Rohrstutzen ist ein im Querschnitt U-förmiges Ringformteil 1 mit seinem rohrförmigen Innenrand 2 angeschweißt. Der Steg des Ringformteils 1 bildet die Dichtfläche 4, auf die eine Packung 5 aufgelegt wird. Der ringförmige Außenrand 6 des Ringformteils 1 bildet eine Auflage und Unterstützung für den Flanschring 7 der im Stegteil 7a Löcher 8 für den Durchtritt der Befestigungsschrauben 9 aufweist und einen in Richtung auf die Dichtfläche umgebördelten Außenrand 7b sowie Innenrand 7c besitzt.

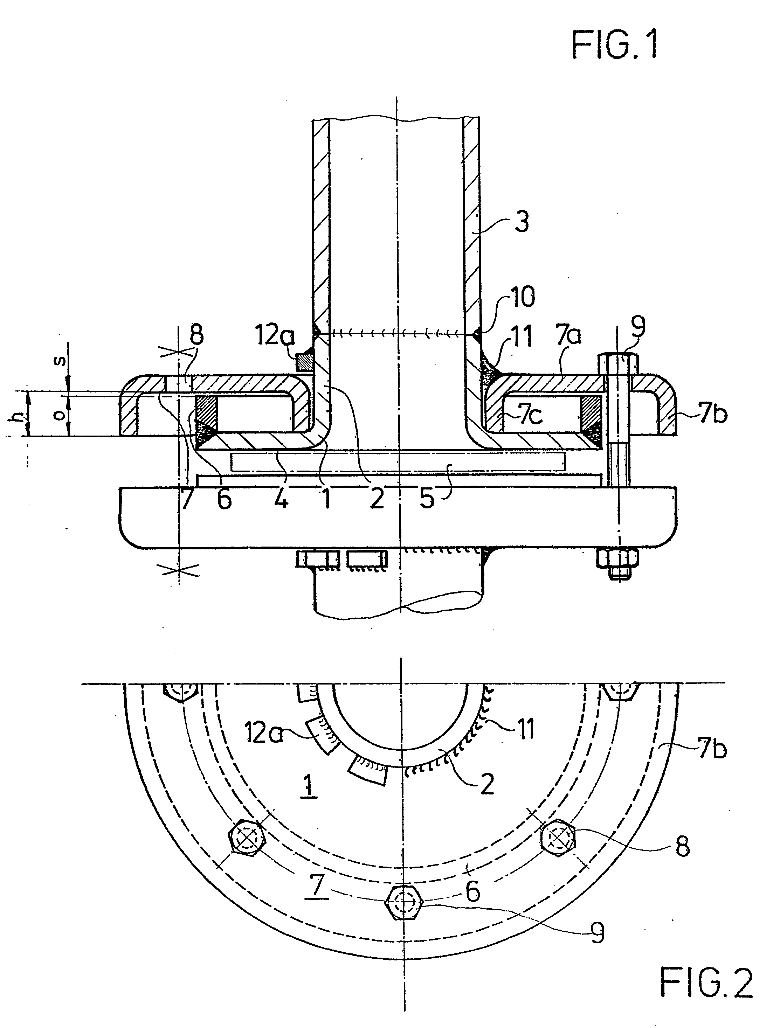

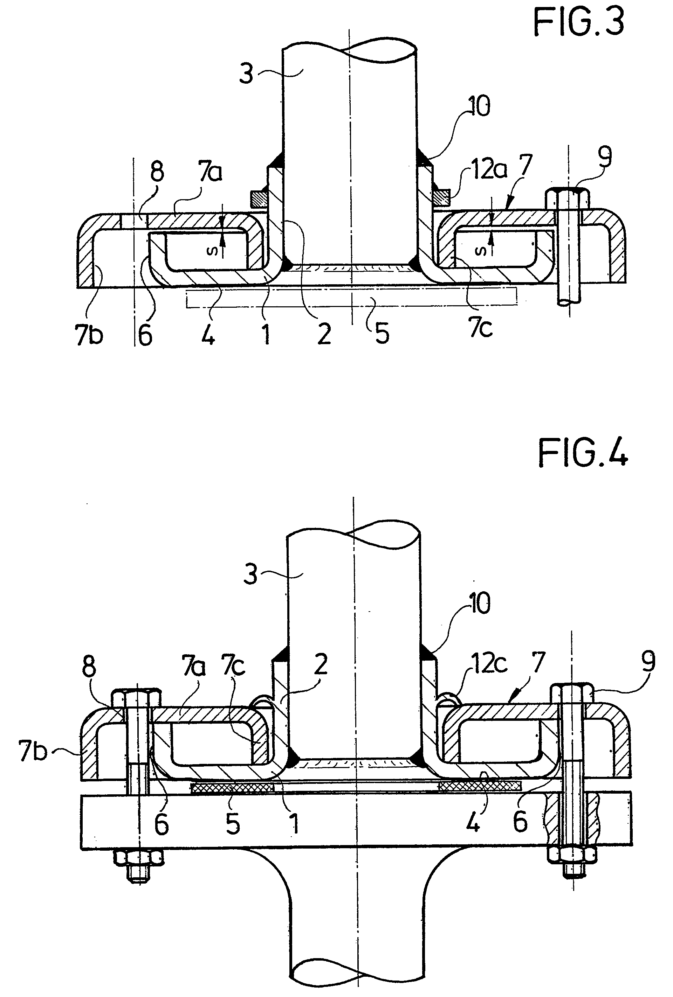

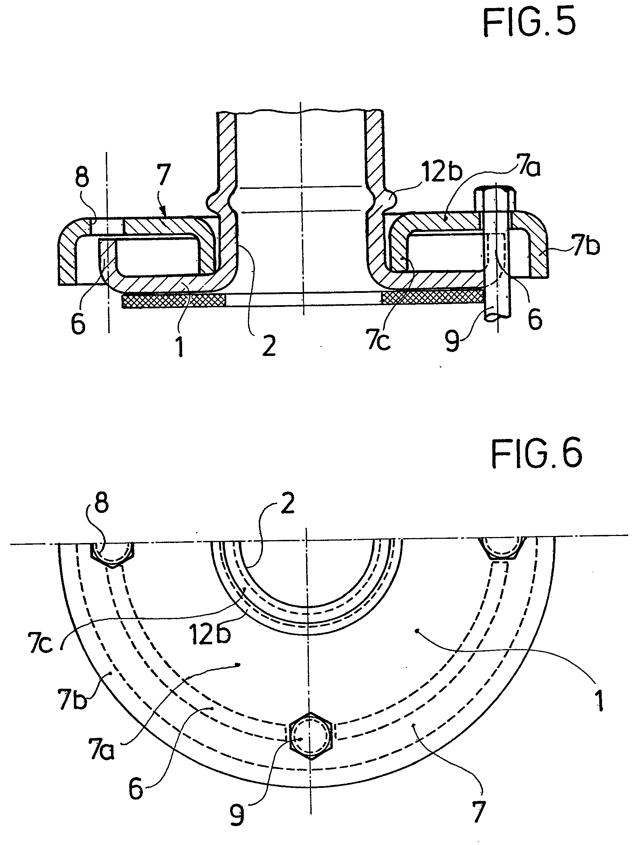

Der Innenrand 2 des Ringformteils 1 hat zweckmäßigerweise eine längere Axialerstreckung als der Außenrand 6, damit die Schweißnaht 10 zwischen Ringformteil 1 und Rohr 3 besser zugänglich ist. Außerdem bietet sich dabei die Möglichkeit, in der Losflanschausführung einen Anschlag 12 am Innenrand 2 des Ringformteils 1 anzuordnen. Dieser Anschlag kann die Form angeschweißter Distanzstücke 12a (Fig. 1 und 3), die Form von Ausprägungen 12b (Fig. 5) oder die Form eines durch Abschieben von material von der Oberfläches des Innenrandes 2 des Ringformteils 1 hakenförmig gekrümmten Ringansatzes 12c (Fig. 4) haben.

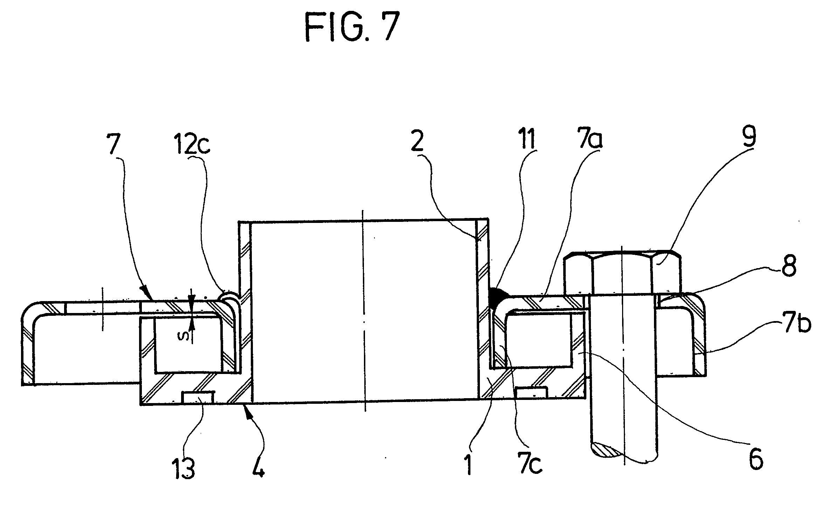

In der Ausführung als Festflansch kann der Flanschring 7 über die Schweißnaht 11 am Innenrand 2 des Ringformteils 1 angeschweißt sein (rechter Teil der Fig. 1 und 7).

Fig. 1 zeigt die Flanschverbindung in nicht festgespanntem Zustand, also mit noch losen Schrauben 9. In diesem Zustand ist zwischen dem Stegteil 7a des Flanschrings 7 und dem Außenrand 6 des Ringformteils 1 ein Spalt der Länge s offen, die der Differenz zwischen der Höhe h des Innenrandes 7c des Flanschrings 7 und der Höhe o des Außenrandes 6 des Ringformteils 7 entspricht. So wird beim Anziehen der Befestigungsschrauben 9 zunächst der Flanschring 7 elastisch verformt. Bei weiterem Anziehen der Befestigungsschrauben 9 schließt sich der Spalt der Länge s zwischen Stegteil 7a und Außenrand 6, und die Krafteinleitung in die Dichtfläche 4 erfolgt nun über den Außenrand 6 von außen und über den Innenrand 7c gleichzeitig von innen her. Dadurch ist gewährleistet, daß die Dichtung 5 nun auf der gesamten Breite gleichmäßig gepreßt wird. Fig. 4 zeigt den Endzustand der Flanschverbindung im festgespannten Zustand.

Um höchstmögliche Stabilität zu erreichen, soll die Abstützung durch den Außenrand 6 des Ringformteils 1 möglichst nahe an den Schraubenlöchern 8, d. h. am Angriffspunkt der Befestigungsschrauben liegen, so daß sich ein möglichst geringer Hebelarm zwischen diesem Angriffspunkt und der Abstützung des Flanschrings 7 durch den Außenrand 6 des Ringformteils 1 ergibt.

Die in Fig. 3 dargestellte Ausführungsform des erfindungsgemäßen Flanschs unterscheidet sich von der in Fig. 1 dargestellten nur dadurch, daß das Ringformteil 1 nicht an das Ende des Rohrs 3 angeschweißt, sondern auf dieses aufgeschoben und als Aufsteckschweißflansch mit ihm verschweißt ist. Der Flanschring 7 ist nicht mit dem Ringformteil 1 verschweißt, sondern als Losflansch in Umfangsrichtung in eine Stellung frei drehbar, in der die Schraubenlöcher 8 mit denen im Gegenflansch fluchten.

Die Figuren 5 und 6 zeigen ein Ausführungsbeispiel des Flanschs, bei dem das Ringformteil 1 einen Außenrand 6 mit einem Durchmesser hat, der gleich dem Durchmesser des Teilkreises für die Schraubenlöcher 8 ist. Im Bereich der Schraubenlöcher 8 ist der Außenrand 6 ausgeklinkt (Fig. 6).

Bei dem in Fig. 7 dargestellten Ausführungsbeispiel des erfindungsgemäßen Flanschs ist die Wandstärke des Ringformteils 1 im Bereich der Dichtfläche 4 stärker, was das Einarbeiten einer Nut 13 für eine Feder-Nut-Verbindung ermöglicht. Dabei hat der nicht dargestellte gegenüberliegende Flansch die in die Nut 13 eingreifende Feder.

Im rechten Teil der Fig. 7 ist der Flanschring 7 über die Schweißnaht 11 mit dem Ringformteil 1 als Festflansch verschweißt. Der linke Teil der Fig. 7 zeigt die Ausbildung als Losflansch. Der Flanschring 7 ist dabei nur über den Anschlag 12c an der Axialbewegung auf dem Rinfgormteil 1 gehindert, aber drehbar, um die Schraubenlöcher 8 in fluchtende Linie bringen zu können.

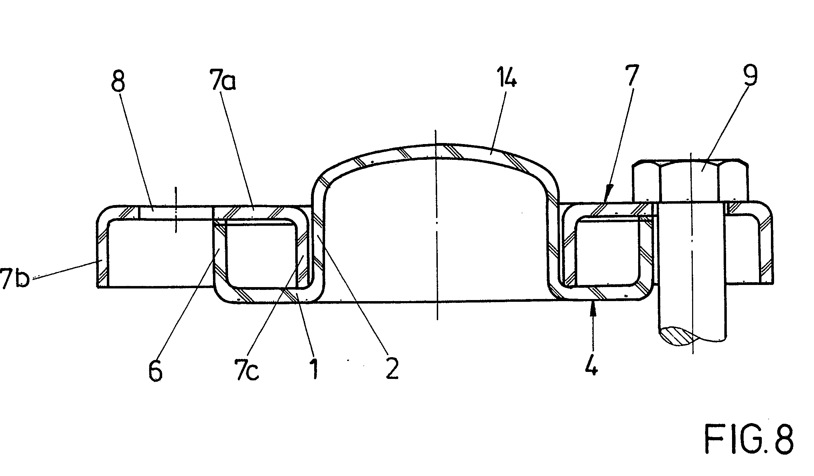

Fig. 8 zeigt den erfindungsgemäßen Flansch in der Ausführung als Blindflansch. Hierzu ist an den rohrförmigen Innenrand 2 des Ringformteils 1 ein gewölbter Abschlußboden 14 einstückig angeformt.

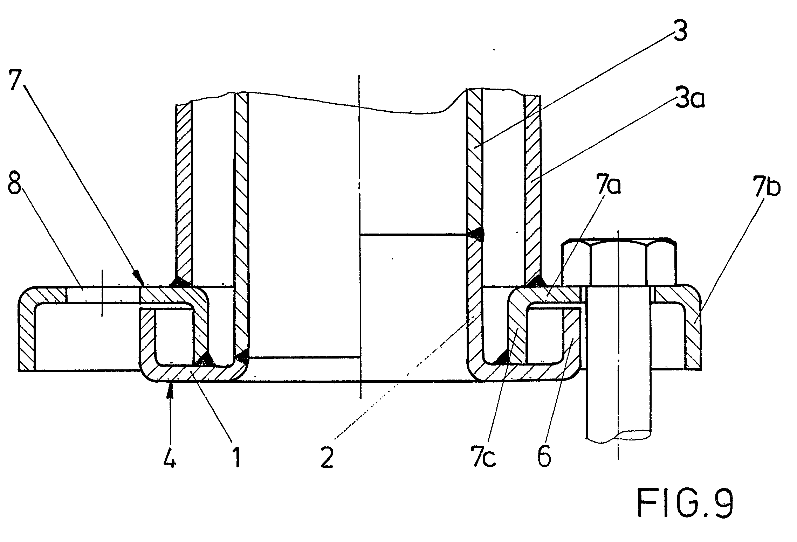

Fig. 9 zeigt schließlich den erfindungsgemäßen Flansch in modifizierter Ausführung zur Anbringung an eine beheizte oder gekühlte Rohrleitung, bestehend aus Innenrohr 3 und Außen- oder Mantelrohr 3a, zwischen denen das Heiz- oder Kühlmedium strömt. Bei dieser Ausführung steht der Innenrand 7c des Flanschrings 7 bewußt etwas auf Abstand zu dem Innenrand 2 des Ringformteils 1, damit in den Spalt Heiz- oder Kühlmedium bis an die Dichtfläche 4 heranströmen kann, um diese in gleicher Weise zu beheizen oder zu kühlen wie den übrigen Teil der Rohrleitung, wodurch Wärmespannungen im Flanschbereich vermieden werden können.

Die Darstellung in den Figuren 7 bis 9 zeigt jeweils den Flansch im nicht festgespannten Zustand, d. h. mit offenem Spalt der Länge s zwischen dem Außenrand 6 des Ringformteils 1 und dem Stegteil 7a des Flanschrings 7.

## Ansprüche

1. Flansch als Verbindungselement für Rohrleitungen, Armaturen oder Behälter, bestehend aus einem im Querschnitt U-förmigen Flanschring (7) und einem im Querschnitt ebenfalls U-förmigen Ringformteil (1), dessen Stegteil die Dichtfläche (4) des Flansches bildet, wobei der Flanschring (7) Löcher (8) in seinem Stegteil (7a) für den Durchtritt von Befestigungsschrauben (14), einen in Richtung auf die Dichtfläche (4) zu abgewinkelten Außenrand (7b) und einen in gleicher Richtung um 90° abgewinkelten Innenrand (7c) aufweist und das Ringformteil (1) einen um 90° von der Dichtfläche (4) weg gebogenen, außenrand (6) und einen an oder auf das Rohr (3) oder einen Stutzen an der Armatur oder dem Behälter geschweißten rohrförmigen Innenrand (2) besitzt und wobei der Außenrand (7b) des Flanschrings (7) den Außenrand (6) des Ringformteils (1) umgreift, der Innenrand (7c) des Flanschrings (7) an dem Stegteil des Ringformteils (1) anliegt und der Außenrand (6) des Ringformteils (1) im gespannten Zustand der Flanschverbindung auf dem Stegteil (7a) des Flanschrings (7), dadurch gekennzeichnet, daß der Innenrand (7c) des Flanschrings (7) eine Höhe (h) besitzt, die um die Länge (s) größer ist als die Höhe (o) des möglichst nahe an dem Teilkreis der Schraubenlöcher (8) in dem Flanschring (7) gelegenen Außenrandes (6) des Ringformteils (1), wobei die Länge (s) so bemessen ist, daß beim Anziehen der Befestigungsschrauben (14) erst nach elastischer Verformung des Flanschrings (7) sein Stegteil (7a) an dem Außenrand (6) des Ringformteils (1) zur Anlage kommt.

2. Flansch nach Anspruch 1, dadurch gekennzeichnet, daß die Länge (s) im Bereich von Zehntelmillimetern bis zu einigen Millimetern liegt.

3. Flansch nach Anspruch 1 oder 2, dadurch gekennzeichnet, daß der Innendurchmesser des Flanschrings (7) nur etwas größer ist als der Außendurchmesser des rohrförmigen Innenrandes (2) des Ringformteils (1).

4. Flansch nach einem der Ansprüche 1 bis 3, dadurch gekennzeichnet, daß der Flanschring (7) mit dem Innenrand (2) des Ringformteils (1) verschweißt ist.

5. Flansch nach einem der Ansprüche 1 bis 3, dadurch gekennzeichnet, daß am Innenrand (2) des Ringformteils (1) oder auf dem Rohr (3) eine axiale Bewegung des Flanschrings (7) auf dem Ringformteil (1) oder Rohr (3) verhindernde Anschläge (12) vorgesehen sind.

6. Flansch nach einem der Ansprüche 1 bis 5, dadurch gekennzeichnet, daß das Ringformteil (1) aus rost- oder korrosionsbeständigem und der Flanschring (7) aus geringwertigerem Stahl, wie Kohlenstoffstahl, besteht.

**Claims**

1. A flange as connecting element for pipework, fittings or containers, consisting of a flange ring (7) of U-shaped cross-section and a ring form part (1) which is likewise of U-shaped cross-section and whose crosspiece forms the sealing surface (4) of the flange, where the flange ring (7) has holes (8) in its crosspiece (7a) for the insertion of fixing screws (14) and has an outer rim (7b) bent in the direction of the sealing surface (4), and an inner rim (7c) is angled at 90° in the same direction, and the ring form part (1) possesses an outer rim (6) bent at 90° away from the sealing surface (4) and a tubular inner rim (2) welded against or on the pipe (3) or a nozzle on the fitting or the container, and where the outer rim (7b) of the flange ring (7) encloses the outer rim (6) of the ring form part (1), and the inner rim (7c) or the flange ring (7) rests against the crosspiece of the ring form (1) and, when the flange connection has been tightened, the outer rim (6) of the ring form part (1) rests on the crosspiece (7a) of the flange ring (7) characterised in that the inner rim (7c) of the flange ring (7) possesses a height (h) which is greater by a length (s) than the height (o) of the outer rim (6) of the ring form part (1), the outer rim (6) of the ring form part (1) being as near as possible to the pitch circle of the screw holes (8) in the flange ring (7), and the length (s) being so calculated that on tightening the fixing screws (14) the crosspiece (7a) of the flange ring (7) does not come to rest against the outer rim (6) of the ring form part (1) until elastic re-shaping of the flange ring (7) has taken place.

2. A flange according to claim 1, characterised in that the length (s) lies in the region of tenths of a millimeter to several millimeters.

3. A flange according to claim 1 or 2, characterised in that the inner diameter of the flange ring (7) is only slightly greater than the outer diameter of the tubular inner rim (2) of the ring form part (1).

4. A flange according to one of claims 1 to 3, characterised in that the flange ring (7) is fusion welded to the inner rim (2) of the ring form part (1).

5. A flange according to one of the claims 1 to 3, characterised in that a stop (12) is provided on the inner rim (2) of the ring form part (1) or on the pipe (3) in order to prevent axial movement of the flange ring (7) on the ring form part (1) or on the pipe (3).

6. A flange according to one of the claims 1 to 5, characterised in that the ring form part (1) consists of rust or corrosion resistant steel, and the flange ring (7) of lower value e. g. carbon, steel.

**Revendications**

1. Flasque formant élément de liaison pour des conduites tubulaires, des armatures ou des récipients, constitué d'un collier (7) et d'une pièce de forme annulaire (1) également en forme de U dont la portion de dos forme la surface d'étanchéité (4) de la flasque, le collier (7) présentant des trous (8) dans sa portion de dos (7a) pour le passage de vis de fixation (14), un bord extérieur (7b) replié en direction de la surface d'étanchéité (4) et un bord intérieur (7c) replié de même direction à 90°, et la pièce de forme annulaire (1) possédant un bord extérieur (6) replié à 90° en s'écartant de la surface d'étanchéité (4) et un bord intérieur (2) tubulaire soudé à ou sur le tube (3) ou un manchon sur l'armature ou le récipient, le bord extérieur (7b) du collier (7) entourant le bord extérieur (6) de la pièce de forme annulaire (1), le bord intérieur (7c) du collier (7) étant logé contre la portion de dos de la pièce de forme annulaire (1) et le bord extérieur (6) de la pièce de forme annulaire (1) étant en repos sur la portion de dos (7a) du collier (7) à l'état de tension de la liaison à flasque, caractérisée par le fait que le bord intérieur (7c) du collier (7) possède une hauteur (h) qui est plus grande de la longueur (s) que la hauteur (o) du bord extérieur (6) de la pièce de forme circulaire (1) au plus proche voisinage possible du cercle primitif des trous de vis (8) dans le collier (7), la longueur (s) ayant une valeur telle que, lors du serrage des vis de fixation (14), la portion de dos (7a) du collier (7) n'arrive en contact sur le bord extérieur (6) de la pièce de forme annulaire (1) qu'après déformation élastique du collier (7).

2. Flasque selon la revendication 1, caractérisée par le fait que la longueur (s) est comprise dans la fourchette allant de quelques dixièmes de millimètre à quelques millimètres.

3. Flasque selon l'une des revendications 1 et 2, caractérisée par le fait que le diamètre intérieur du collier (7) n'est que légèrement supérieur au diamètre extérieur du bord intérieur (2) tubulaire de la pièce de forme annulaire (1).

4. Flasque selon l'une des revendications 1 à 3, caractérisée par le fait que le collier (7) est soudé au bord intérieur (2) de la pièce de forme annulaire (1).

5. Flasque selon l'une des revendications 1 à 3, caractérisée par le fait que des butées (12) empêchant un mouvement axial du collier (7) sur la pièce de forme annulaire (1) ou le tube (3) sont prévues sur le bord intérieur (2) de la pièce de forme annulaire (1) ou sur le tube (3).

6. Flasque selon l'une des revendications 1 à 5, caractérisée par le fait que la pièce de forme annulaire (1) est constituée d'un acier inoxydable ou résistant à la corrosion et le collier (7) est constitué d'un acier inférieur comme de l'acier au carbone.

FIG.1

FIG.2

0 054 574

FIG.3

FIG.4

2

**FIG.5**

**FIG.6**

# FIG. 7

FIG.8

0 054 574

FIG.9